# EUROPEAN PATENT SPECIFICATION

(11) **EP 2 910 819 B1**
(45) Date of publication and mention of the grant of the patent: **31.08.2016**
(21) Application number: 15155363.3
(22) Date of filing: 17.02.2015
(51) Int. Cl.: F16H 9/18, F16H 63/06, F16H 57/031, F16H 57/035, F16H 57/04, F16H 59/38, B62M 7/12, F16H 57/02

(54) **V-BELT CONTINUOUSLY VARIABLE TRANSMISSION SYSTEM FOR STRADDLE TYPE VEHICLE**
Stufenloses Keilriemengetriebesystem für ein Grätschsitzfahrzeug
Système de transmission à variation continue à courroie trapézoïdale pour véhicule à enfourcher

(30) Priority: 24.02.2014 JP 2014033248
(43) Date of publication of application: 26.08.2015
(73) Proprietor: HONDA MOTOR CO., LTD., Tokyo, 107-8556 (JP)
(72) Inventor: Takiguchi, Chikashi, Saitama, 351-0193 (JP); Inomoto, Yutaka, Saitama, 351-0193 (JP); Yokotani, Hitoshi, Saitama, 351-0193 (JP)
(74) Representative: Brevalex

(56) References cited:
- EP-A1- 2 019 233
- EP-A2- 1 521 017
- JP-B2- 4 963 901

## Description

### TECHNICAL FIELD

The present invention relates to a V-belt continuously variable transmission system for a straddle type vehicle, and, in particular, to a mounting structure of a rotating speed sensor.

### BACKGROUND ART

Generally, a V-belt continuously variable transmission system of a straddle type vehicle comprises a belt transmission chamber formed between a transmission case on the inside in the vehicle width direction and a transmission case cover on the outside in the vehicle width direction, a drive shaft and a driven shaft extending in the vehicle width direction and being arranged in a front part and a rear part of the belt transmission chamber, and a V-belt being wrapped around a drive pulley pivotally supported on the drive shaft and a driven pulley pivotally supported on the driven shaft so as to extend between these pulleys.

There is an example in which a rotational speed sensor for detecting a rotation speed of the driven pulley is mounted on the transmission case cover in order to check a speed change ratio of this V-belt continuously variable transmission, (see_Japanese patent No. 4963901).

### PRIOR ART REFERENCE

In a rotational speed sensor mounting structure of the V-belt continuously variable transmission disclosed in Japanese patent No. 4963901, the driven pulley pivotally supported on the driven shaft in the rear includes a fixed driven pulley half body located on the inside in the vehicle width direction and a movable driven pulley half body located on the outside in the vehicle width direction. The rotational speed sensor is mounted on an upper peripheral wall of a peripheral wall of the transmission case cover covering an outer circumference of the V-belt in order to detect the rotation speed of the fixed driven pulley half body located on the inside in the vehicle width direction.

The upper peripheral wall of the transmission case cover located above the movable driven pulley half body is concaved downwardly, and by utilizing this concaved portion, the rotational speed sensor is mounted from the outside in the vehicle width direction.

The fixed driven pulley half body has an enlarged outer diameter larger than the movable driven pulley half body. The rotational speed sensor is located facing the enlarged outer peripheral edge of the fixed driven pulley half body from a lateral side and configured to detect the rotation speed of the fixed driven pulley half body.

### DISCLOSURE OF THE INVENTION

### PROBLEM TO BE SOLVED BY THE INVENTION

Like this, in the rotational speed sensor mounting structure in which the rotational speed sensor is mounted from the outside on the transmission case cover in a radially outward position of the movable driven pulley half body, an outer diameter of the fixed driven pulley half body becomes larger, and the transmission case cover and the transmission case each of which covers the fixed driven pulley half body increase in size in the radially outward direction.

Further, when the rotational speed sensor is arranged on the outside of the transmission cover and on the radially outward side (the upper side) of the movable driven pulley half body, it exerts a great influence upon a layout of component parts and freedom of design is restricted, especially in a vehicle such as a straddle type vehicle that has limited space around the transmission device.

The present invention has been made in consideration of such circumstances, and has an objective of providing a V-belt continuously variable transmission system for a straddle type vehicle which is able to avoid an increase in size around a driven pulley of the V-belt continuously variable transmission system and to improve the freedom of design including layout of component parts, in relation to a mounting structure of a rotational speed sensor.

### MEANS FOR SOLVING THE PROBLEM

In order to solve the above mentioned problem, according to a first feature of the present invention, there is provided a V-belt continuously variable transmission system for a straddle type vehicle comprising a transmission case, a transmission case cover for covering the transmission case from the outside in the vehicle width direction, a belt transmission chamber formed in an internal area between the transmission case and the transmission case cover, a drive pulley pivotally supported on a drive shaft extending in the vehicle width direction, a driven pulley pivotally supported on a driven shaft which is arranged in parallel with the drive shaft, a V-belt wrapped around the drive pulley and the driven pulley, the drive pulley, the driven pulley and the V-belt accommodated in the belt transmission chamber, and a rotational speed sensor for detecting a rotational speed of the driven pulley, being mounted on the transmission case cover, wherein the rotational speed sensor is arranged on the inside of the V-belt which is rotated in an annular shape, when viewed in the axial direction of the drive shaft.

According to a second feature of the present invention, in the V-belt continuously variable transmission system for the straddle type vehicle as defined in the first feature, a main body of an internal combustion engine is connected continuously to a front part of the transmission case so as to form a power unit, and a front part of the power unit is supported on a vehicle body frame, wherein, within the belt transmission chamber, the driven shaft is situated to the rear of the drive shaft, and the rotational speed sensor is situated forwardly of the driven shaft.

According to a third feature of the present invention, in the V-belt continuously variable transmission system for the straddle type vehicle as defined in the second feature, the rotational speed sensor is arranged on a plane containing an axis of the drive shaft and an axis of the driven shaft.

According to a fourth feature of the present invention, in the V-belt continuously variable transmission system for the straddle type vehicle as defined in the third feature, the rotational speed sensor is mounted on an inner surface of a lateral wall section of the transmission case cover.

According to a fifth feature of the present invention, in the V-belt continuously variable transmission system for the straddle type vehicle as defined in the fourth feature, the driven pulley comprises a movable driven pulley half body which is pivotally supported on the driven shaft in an axially movable fashion, and a fixed driven pulley half body which is fixed on the driven shaft on the inside in the vehicle width direction of the movable driven pulley half body, wherein a portion of the lateral wall section of the transmission case cover projects inwardly in the vehicle width direction so as to form a sensor mounting boss section, and the rotational speed sensor which is mounted on the sensor mounting boss section is arranged in front of and in the vicinity of the fixed driven pulley half body.

According to a sixth feature of the present invention, in the V-belt continuously variable transmission system for the straddle type vehicle as defined in the fifth feature, an inlet port for introducing cooling air into the belt transmission chamber, and an air discharge duct having a outlet port for discharging the cooling air outwardly, are formed in the transmission case cover, wherein the air discharge duct is formed in a cylindrical shape by the lateral wall section of the transmission case cover and an inside lateral wall which is formed in a swelling fashion from an inner surface of the lateral wall section, and the sensor mounting boss section is formed in the inside lateral wall.

According to a seventh feature of the present invention, in the V-belt continuously variable transmission system for the straddle type vehicle as defined in the fifth or sixth feature, a connecting surface between the transmission case and the transmission case cover is located outwardly in the vehicle width direction from a position in the vehicle width direction of a center line in the vehicle width direction of the V-belt at the time when a wrapping diameter of the V-belt wrapped around the driven pulley is smallest, and a sensor harness extending from the rotational speed sensor is arranged along the inner surface of the lateral wall section of the transmission case cover and is drawn out from a harness outlet which is formed in a recessed fashion in the connecting surface of the transmission case cover.

According to an eighth feature of the present invention, in the V-belt continuously variable transmission system for the straddle type vehicle as defined in the seventh feature, the harness outlet is formed outwardly in the vehicle width direction from the V-belt at the time when the wrapping diameter of the V-belt wrapped around the driven pulley is smallest.

According to a ninth feature of the present invention, in the V-belt continuously variable transmission system for the straddle type vehicle as defined in any one of the first through eighth features, a motor unit for adjusting a groove width of the drive pulley is mounted on the transmission case cover.

### EFFECTS OF THE INVENTION

According to the V-belt continuously variable transmission system for the straddle type vehicle as defined in the first feature, in the V-belt continuously variable transmission system for the straddle type vehicle in which the rotational speed sensor for detecting the rotational speed of the driven pulley, is mounted on the transmission case cover, the rotational speed sensor is arranged on the inside of the V-belt which is rotated in an annular shape, when viewed in the axial direction of the drive shaft. Therefore, the transmission case and the transmission case cover can be prevented from being increased in size in the radial direction of the driven pulley, and it is possible to improve the freedom of design containing the arrangement of component parts arranged around the transmission case and the transmission case cover.

Since the rotational speed sensor is mounted on the transmission case cover located outwardly in the vehicle width direction from the transmission case, the maintainability of the rotational speed sensor can be kept in good condition.

According to the V-belt continuously variable transmission system for the straddle type vehicle as defined in the second feature, the main body of the internal combustion engine is connected continuously to the front part of the transmission case so as to form the power unit, and the front part of the power unit is supported on a vehicle body frame. Within the belt transmission chamber, the driven shaft is situated to the rear of the drive shaft, and the rotational speed sensor is situated forwardly of the driven shaft. With this construction, in the case where a harness of electrical components parts of the power unit side generally is arranged from the front side of the power unit to the vehicle body frame side, and the sensor harness extending from the rotational speed sensor also is arranged from the front side of the power unit to the vehicle body frame side, the length of the harness of the sensor harness can be shortened since the rotational speed sensor is situated in front of the driven shaft.

According to the V-belt continuously variable transmission system for the straddle type vehicle as defined in the third feature, since the rotational speed sensor is arranged on the plane containing the axis of the drive shaft and the axis of the driven shaft, the rotational speed sensor can be situated in a middle height position between an upper rotating portion and a lower rotating portion of the V-belt on the inside of the V-belt which is wrapped around the drive pulley pivotally supported on the drive shaft and the driven pulley pivotally supported on the driven shaft and which is rotated in an annular shape, and can be effectively prevented from interfering with the V-belt which is fluctuated in positions by changes in width in the upward and downward direction between the upper rotating portion and the lower rotating portion of the V-belt that arise from motion in variable speed and by vibrations of the V-belt, whereby it is possible to maintain an enough area for the motion in variable speed.

According to the V-belt continuously variable transmission system for the straddle type vehicle as defined in the fourth feature, since the rotational speed sensor is mounted on the inner surface of the lateral wall section of the transmission case cover, the rotational speed sensor can be easily arranged in a predetermined position within the belt transmission chamber when the transmission case cover on the inner surface of which the rotational speed sensor is mounted is connected together with the transmission case in such a way as to cover the latter, whereby the rotational speed sensor can be prevented from being exposed to the outside of the vehicle and can be protected from external factors.

In addition, since the rotational speed sensor is attached to the inner surface of the lateral wall section of the transmission case cover, the projection of the rotational speed sensor to the outside in the vehicle width direction can be suppressed, whereby a bank angle of the straddle type vehicle can be ensured sufficiently.

According to the V-belt continuously variable transmission system for the straddle type vehicle as defined in the fifth feature, a portion of the lateral wall section of the transmission case cover projects inwardly in the vehicle width direction so as to form the sensor mounting boss section, and the rotational speed sensor which is mounted on the sensor mounting boss section is arranged in front of and in the vicinity of the fixed driven pulley half body. Therefore, the rotational speed sensor and the fixed driven pulley half body can be compactly arranged in the vehicle width direction, and the increase in size of the V-belt continuously variable transmission system in the vehicle width direction can be suppressed, whereby it is possible to ensure the bank angle sufficiently in the straddle type vehicle.

According to the V-belt continuously variable transmission system for the straddle type vehicle as defined in the sixth feature, the inlet port for introducing cooling air into the belt transmission chamber, and the air discharge duct having the outlet port for discharging the cooling air outwardly, are formed in the transmission case cover, wherein the air discharge duct is formed in a cylindrical shape by the lateral wall section of the transmission case cover and the inside lateral wall which is formed in a swelling fashion from the inner surface of the lateral wall section, and the sensor mounting boss section is integrally formed in the inside lateral wall. With this construction, the sensor mounting boss section is decreased in size and easy to ensure the rigidity, whereby the supporting strength of the rotational speed sensor can be improved.

According to the V-belt continuously variable transmission system for the straddle type vehicle as defined in the seventh feature, the connecting surface between the transmission case and the transmission case cover is located outwardly in the vehicle width direction from the position in the vehicle width direction of the center line in the vehicle width direction of the V-belt at the time when a wrapping diameter of the V-belt wrapped around the driven pulley is smallest, and the sensor harness extending from the rotational speed sensor is arranged along the inner surface of the lateral wall section of the transmission case cover and is drawn out from the harness outlet which is formed in a recessed fashion in the connecting surface of the transmission case cover. With this construction, the sensor harness which extends from the rotational speed sensor can be effectively prevented from interfering with the V-belt which is fluctuated in positions by the changes in width in the upward and downward direction between the upper rotating portion and the lower rotating portion of the V-belt that arise from the motion in variable speed and by the vibrations of the V-belt.

According to the V-belt continuously variable transmission system for the straddle type vehicle as defined in the eighth feature, since the harness outlet is formed outwardly in the vehicle width direction from the V-belt at the time when the wrapping diameter of the V-belt wrapped around the driven pulley is smallest, the interference between the V-belt and the sensor harness can be prevented more effectively, and the interference between the driven pulley and the sensor harness can also be prevented in the radial direction of the driven pulley.

In addition, the transmission case and the transmission case cover can be decreased in size in the radial direction of the driven pulley all the more.

According to the V-belt continuously variable transmission system for the straddle type vehicle as defined in the ninth feature, since the motor unit for adjusting the groove width of the drive pulley is mounted on the transmission case cover, both of the rotational speed sensor and the motor unit are mounted on the transmission case cover, so that access to each of the rotational speed sensor and the motor unit can be facilitated so as to improve the maintainability all the more.

### BRIEF DESCRIPTION OF THE DRAWINGS

FIG. 1 is a left side view of the whole straddle type two-wheeled motorcycle in accordance with an embodiment of the present invention;
FIG. 2 is a left side view of a power unit in FIG. 1;
FIG. 3 is a longitudinal cross sectional development (a longitudinal cross sectional development taken on line III-III of FIGS. 2 and 4) of the power unit;
FIG. 4 is a left side view of the power unit in a state of removing an outermost cover;
FIG. 5 is a left side view of a transmission case cover;
FIG. 6 is a back side view (a right side view) of the transmission case cover on which a motor unit, a rotational speed sensor, a drive pulley, a driven pulley, etc. are mounted;
FIG. 7 is a transverse cross sectional view (a cross sectional view taken on line VII-VII of FIGS. 3 and 4) of the power unit;
FIG. 8 is a transverse cross sectional view (a cross sectional view taken on line VIII-VIII of FIGS. 3 and 4) of the power unit; and
FIG. 9 is a transverse cross sectional view (a cross sectional view taken on line IX-IX of FIGS. 3 and 4) of the power unit.

### BEST MODE FOR CARRYING OUT THE INVENTION

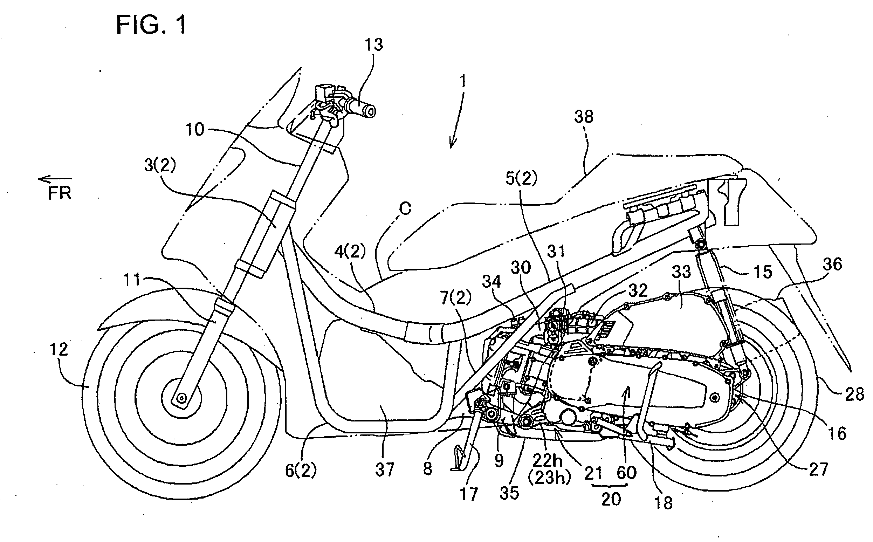

Hereinafter, the embodiment of the present invention will be described with reference to FIGS. 1 through 9.

FIG. 1 is a left side view of the straddle type two-wheeled motorcycle 1 in accordance with an embodiment of the present invention.

In the following description and claims, the orientation such as front, rear, left, right or the like shall be set on the basis of normal standards that the traveling direction of the straddle type motorcycle 1 in accordance with this embodiment is forward.

In the drawings, an arrow FR designates the forward direction of the vehicle, an arrow LH designates the left direction of the vehicle and an arrow RH designates the right direction of the vehicle, respectively.

In the side view of the straddle type motorcycle 1 in FIG. 1, a vehicle cover C is shown by two-dot chain lines, and a structure within the vehicle body cover C is shown by solid lines.

Referring now to FIG. 1, a vehicle body frame 2 which forms a skeletal framework of the vehicle body of this scooter type motorcycle includes a main frame 4 extending rearwardly and downwardly from a head pipe 3 located in a front part of the vehicle body, and a pair of left and right seat rails 5, 5 being bifurcated left and right at a rear end of the main frame 4 and extending rearwardly and upwardly therefrom.

In addition to the main frame 4, a pair of left and right down frames 6, 6 extends downwardly from the head pipe 3 and is bent horizontally so as to extend rearwardly in a floor area. Then, the pair of left and right down frames 6, 6 is bent upwardly at a rear part of the floor area and connected to a front end portion of the seat rails 5, 5. Back stays 7, 7 which provide connections between bent portions of the down tubes 6, 6 in the rear part of the floor area and middle portions in the forward and rearward direction of the seat rails 5, 5 are configured to support the seat rails 5, 5.

In a front part of the vehicle body frame 2 constructed as above, a steering stem 10 passes through the head pipe 3 in a pivotable fashion. A lower end of the steering stem 10 is integrally connected to a front fork 11 which carries a front wheel 12. From an upper end of the steering stem 10, left and right handle bars 13, 13 extend upwardly in such a way as to be spread out left and right.

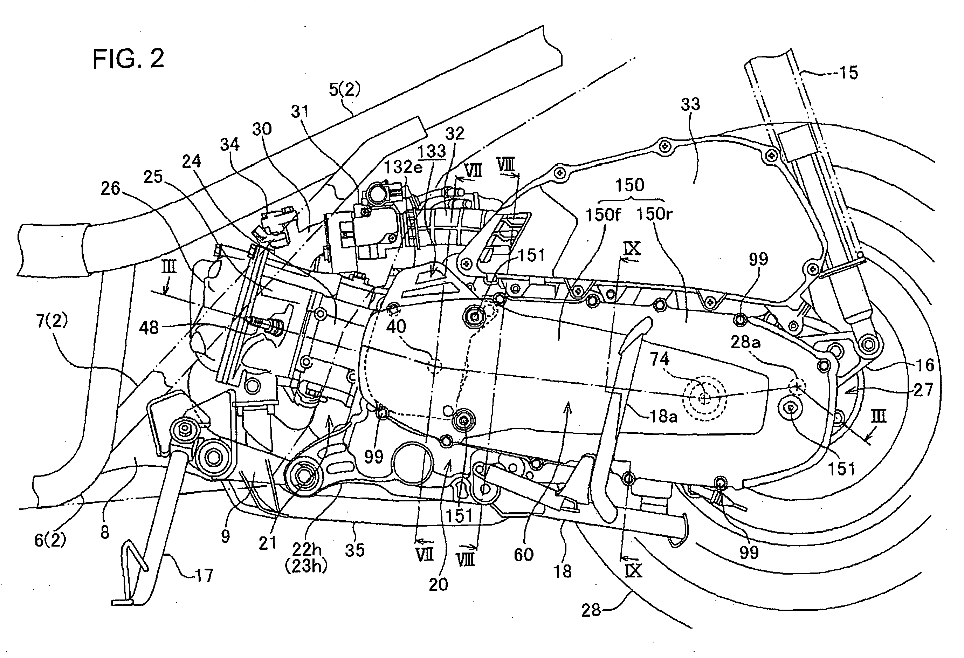

Referring to FIGS. 1 and 2, support brackets 8, 8 project rearwardly from the bent portions of the down tubes 6, 6 in the rear part of the floor area and downwardly from the front end portions of the seat rails 5, 5. A swing type power unit 20 is swingably connected through a link member 9 to front end portions of the support brackets 8, 8.

The power unit 20 includes a single cylinder, 4-stroke cycle, OHC type water cooled internal combustion engine 21 in a front part thereof. A right crank case 22 and a left crank case section 23 formed of a front part of a forwardly and rearwardly extending transmission case 23 are joined to each other in the left and right direction to form a joined crank case 22, 23c. A cylinder block 24, a cylinder head 25 and a cylinder head cover 26 are piled up in order and project forwardly from the joined crank case 22, 23c in a condition where a cylinder axis is inclined large to come close to the horizontal.

In this power unit 20, a V-belt continuously variable transmission system 60 is provided on the left side of the transmission case 23 which has the left crank case section 23c at the front part thereof and extends long in the rearward direction. A reduction gear device 27 is located in a rear part of the V-belt continuously variable transmission system 60, and a rear wheel 28 is provided on an output shaft (rear axle shaft) 28a of the reduction gear device 27. A hanger bracket 22h (23h) which projects forwardly from a lower part of the crank case 22, 23c of the internal combustion engine 31 is link-connected to the link member 9. A rear cushion 15 is arranged between a bracket 16 projecting from a rear part of the power unit 20 and a bracket 5b projecting from a rear part of the seat rail 5.

An intake pipe 30 extends upwardly from the cylinder head 25 of the internal combustion engine 21 which is inclined large to come close to the horizontal, and is bent so as to extend rearwardly whereby to be connected to a throttle body 31. The throttle body 31 is joined through a connecting pipe 32 to an air cleaner 33 which is arranged above the V-belt continuously variable transmission system 60.

To the intake pipe 30 there is attached a fuel injection valve 34 in the direction of an intake port.

An exhaust pipe 35 extending downwardly from the cylinder head 25 is bent rearwardly and leaned to the right side so as to extend rearwardly whereby to be connected to a muffler 36 located on the right side of the rear wheel 28.

In an area around a lower part of the power unit 20, a side stand 17 is attached to a left support bracket 8 in a movable fashion between a raising position and a falling position in a condition where a basal end portion thereof is pivotally supported. In a middle lower part in the forward and rearward direction of the V-belt continuously variable transmission system 60, a main stand 18 is provided in a movable fashion between a raising position and a falling position in a condition where a basal end portion thereof is pivotally supported.

In addition, a fuel tank 37 is arranged between the main frame 4 and the left and right down tubes 6, 6, and a seat 38 is arranged above the seat rails 5, 5.

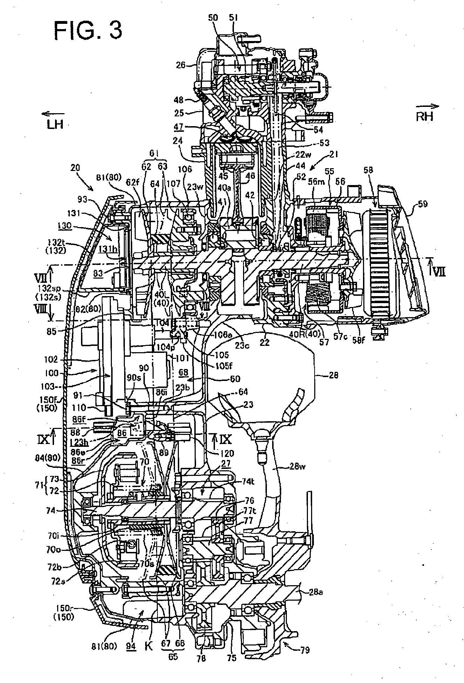

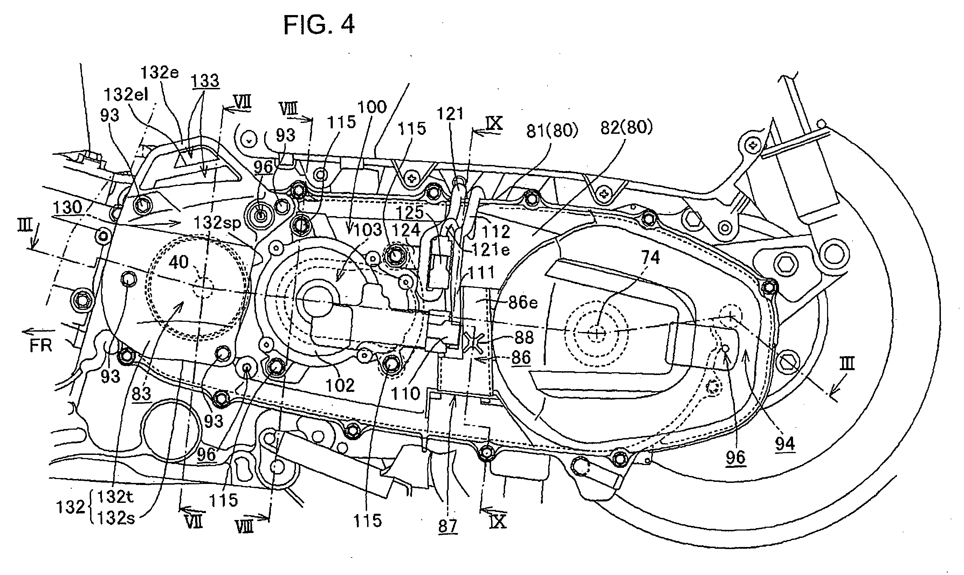

FIG. 3 is a longitudinal cross sectional development (longitudinal cross sectional development taken on line III-III of FIGS. 2 and 4) of the power unit 20.

The internal combustion engine 21 includes a piston reciprocating a cylinder bore of the cylinder block 24, a crank pin 40a of a crankshaft 40, and a connecting rod 46 connecting the piston 45 and the crank pin 40a.

In the cylinder head 25 there is formed a combustion chamber 47 in a face to face relationship with a top surface of the piston 45, and a spark plug 47 is fitted in such a way as to face into the combustion chamber 47.

A valve operating device 50 of an overhead camshaft (OHC) type is provided above the cylinder head 25.

Left and right outer shaft sections 40L, 40R which extend in the horizontal direction of the crankshaft 40 are pivotally supported on a bearing wall 23w of the left crank case section 23c of the transmission case 23 and a bearing wall 22w of the right crank case 22 through a ball bearing 41 and a roller bearing 42 in a rotatable fashion, respectively.

A cam chain drive sprocket 52 is fitted in engagement with the right outer shaft section 40R of the crankshaft 40, and a starter and electric generator unit 55 is provided on a right end of the right outer shaft section 40R. A drive pulley 61 of the V-belt continuously variable transmission system 60 is provided on the left outer shaft section 40L.

A cam chain 43 wrapped around the cam chain drive sprocket 52 is wrapped around a cam chain driven sprocket 54 which is fitted in engagement with a cam shaft 51 of the valve operating device 50, so that the rotation of the crankshaft 40 is transmitted to the cam shaft 51.

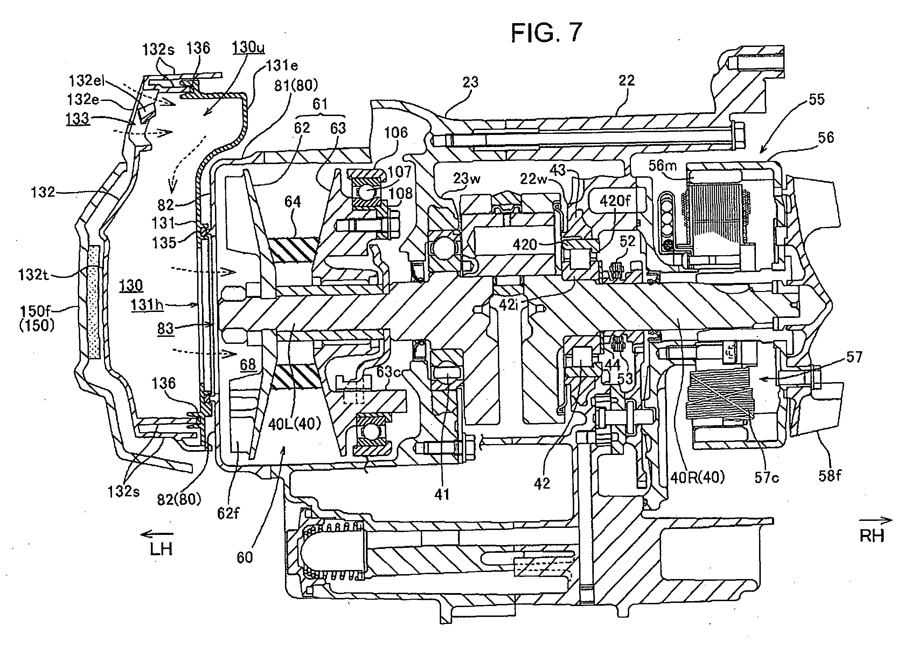

Referring to FIG. 7, the roller bearing 42 on the right side for pivotally supporting the crankshaft 40 includes an outer race 42o which is press fitted into and securely fixed in a cast bushing 43 cast in the bearing wall 22w of the right crank case 22.

Although the right outer shaft section 40R of the crankshaft 40 is fitted into an inner race 42i of the roller bearing 42 up to a root of a crank web, the inner race 42i is not fixed on the right outer shaft section 40R. The inner race 42i is spring-biased to the left by a coned disc spring 44 interposed between itself and the cam chain sprocket 52 fitted in engagement with the right outer shaft section 40R and is pressed against the root portion of the crank web. In such a way, the axial movement of the inner race 42i is suppressed, and so the creation of abrasion and rattle between the inner race 42i of the roller bearing 42 and the crankshaft 40 is prevented.

Further, when the movement in the axial direction of the inner race 42i relative to the crankshaft 40 is suppressed, a gap between a roller of the roller bearing 42 and a reduced diameter flange portion 42of of the outer race 42o is ensured, so that the creation of the abrasion and the noise due to a collision and contact of both is prevented.

The starter and electric generator unit 55 includes an outer rotor 56 of bowl shape which is securely fixed on a right end portion of the right outer shaft section 40R of the crankshaft 40, a magnet 56m which is arranged on an inner circumferential surface of the outer rotor 56 in the circumferential direction, and an inner stator 57 around which a stator coil is wound. On the inside of the magnet 56m, the inner stator 57 is securely fixed on a central cylinder portion through which the crankshaft 40 projecting from the lateral wall of the crank case 22 passes.

The starter and electric generator unit 55 functions as a generator and also as a starter motor.

A radiator fan 58f is attached to a right lateral surface of the outer rotor 46 so as to cool a radiator 58 located on the right side thereof. The radiator 58 is covered with a radiator cover 59.

The drive pulley 61 of the V-belt continuously variable transmission system 60 which is provided on the left outer shaft section 40L of the crankshaft 40 passing through the bearing wall 23w of the left crank case section 23c comprises a fixed drive pulley half body 62 and a movable drive pulley half body 63. The fixed drive pulley half body 62 is securely fixed on a left end of the crankshaft 40. On the right side of the fixed drive pulley half body 62, the movable drive pulley half body 63 is in spline engagement with the crankshaft 40. The movable drive pulley half body 63 is rotated together with the crank shaft 40 and slides in the axial direction so as to move toward and away from the fixed drive pulley half body 62. The V-belt 64 is put between and wrapped around face to face taper surfaces of both the drive pulley half bodies 62, 63.

A cooling fan 62f projects from a lateral surface (left lateral surface) on the opposite side from the taper surface of the fixed drive pulley half body 62.

Referring to FIG. 7, on a lateral surface (right lateral surface) on the opposite side from the taper surface of the movable drive pulley half body 63, a cylinder portion 63c having a center axis coincidental with respect to the axis of the crankshaft 40 is formed in a projecting fashion. An inner race of a ball bearing 107 is fixed on an outer circumferential surface of the cylinder portion 63c by bolting a fixing member 108. An outer fitting member 106 is in engagement with an outer race of the ball bearing 107.

When the outer fitting member 106 is moved in the left and right axial direction of the crankshaft 40 by a speed change motor 101 to be referred to later, the movable drive pulley half body 63 is moved through the ball bearing 107 in the axial direction in such a way as to adjust a groove width between itself and the fixed drive pulley half body 62, whereby the wrapping diameter of the V-belt 64 with respect to the drive pulley 61 is changed thereby to carry out speed change.

The driven pulley 65 on the rear side corresponding to the drive pulley 61 has a fixed driven pulley half body 66 which is fitted in engagement with an inner sleeve 70i which is supported on a reduction gear input shaft 74 of the reduction gear device 27 in a relatively rotatable fashion. On the left side of the fixed driven pulley half body 66, a movable driven pulley half body 67 is fitted in engagement with an outer sleeve 70o which is fitted and supported on the inner sleeve 70i in a relatively movable fashion. The driven pulley 65 is comprised of these driven pulley half bodies 66, 67 (see FIG. 3).

As shown in FIG. 3, the movable driven pulley half body 67 is biased by a spring 70s in the direction approaching the fixed driven pulley half body 66. A torque cam device 70 is incorporated between the inner sleeve 70i and the outer sleeve 70o which is formed integral with the movable driven pulley half body 67.

The V-belt 64 is put between these driven pulley half bodies 66, 67.

Like this, in the V-belt continuously variable transmission system 60, the V-belt 64 is wrapped around the drive pulley 61 and the driven pulley 65 so as to extend between them, and, when the wrapping diameter of the V-belt 64 relative to the drive pulley 61 is changed by adjusting the groove width of the drive pulley 61 through the operation of the speed change motor 101, the wrapping diameter relative to the driven pulley 65 is changed accordingly, whereby the speed change is carried out.

A centrifugal clutch 71 is provided on the left lateral side of the reduction gear input shaft 74 and the inner sleeve 70i. The centrifugal clutch 71 has a clutch inner 72 which is fixed in engagement with the inner sleeve 70i, and a clutch outer 73 which covers an outer circumference of the clutch inner 72. The clutch outer 73 is fixedly engaged on the reduction gear input shaft 74. A clutch shoe 72s which swings in the centrifugal direction in opposition to a spring 72b is provided in the clutch inner 72 in a face to face relationship with an inner circumferential surface of the clutch outer 73.

Accordingly, with increase in rotation speed by the motive power transmitted through the V-belt 64 to the inner sleeve 70i, the clutch shoe 72s swings in the centrifugal direction in opposition to the spring 72b and comes into contact with the inner circumferential surface of the clutch outer 73, so that the centrifugal clutch 71 is connected and the motive power is transmitted to the reduction gear input shaft 74.

The left side of the transmission case 22 extending long in the forward and rearward direction is covered with a transmission case cover 80, and a belt transmission chamber 68 is formed between the transmission case 23 and the transmission case cover 80. The V-belt continuously variable transmission system 60 is provided in the belt transmission chamber 68, and the centrifugal clutch 71 also is accommodated therein.

The reduction gear input shaft 74 passes through the transmission case 23 to the right, and is formed with reduction gear input teeth 74t at the right end thereof.

In the rear of the reduction gear input teeth 74t, an intermediate shaft 77 is rotatably supported on the transmission case 23 and a reduction gear case 27c. An intermediate gear 76 which is in spline engagement with the intermediate shaft 77 is in mesh with the reduction gear input teeth 74t.

Intermediate teeth 77t of small diameter are formed on the intermediate shaft 77. The rear axle shaft 28a located to the rear of the intermediate shaft 77 is pivotally supported on the transmission case 23 and the reduction gear case 75 in a rotatable fashion. A wheel 28w of the rear wheel 28 is fitted in engagement with a right end of the rear axle shaft 28a which passes through the reduction gear case 37, thereby allowing the rear wheel 28 to be mounted.

A final gear 78 fitted in engagement with this rear axle shaft 28a is in mesh with the small diameter intermediate teeth 77t of the intermediate shaft 77.

In the reduction gear device 27 constructed as above, the motive power transmitted to the reduction gear input shaft 74 is reduced the speed by reduction gear trains comprising the meshing engagement between the reduction gear input teeth 74t and the intermediate gear 76 through the intermediate shaft 77 and the meshing engagement between the intermediate teeth 77t and the final gear 78. Then, this motive power is transmitted to the rear axle shaft 28a to thereby rotate the rear wheel 28.

In addition, in a hub section of the rear wheel 28w there is provided a drum brake 79 for putting a brake on the rear wheel 28.

A motor unit 100 of the speed change motor 101 is mounted on the transmission case cover 80 covering the left side of the transmission case 23. The left side of the transmission case cover 80 is covered with an outermost cover 150 which is mounted on the transmission case cover 80. The motor unit 100 is covered also with the outermost cover 150 (see FIG. 3).

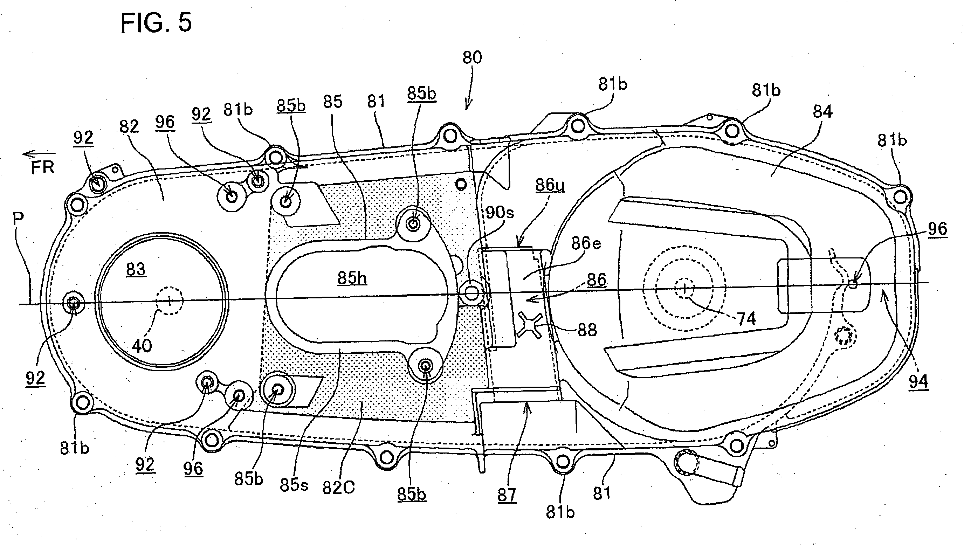

Referring to FIG. 5 which is a left side view of the transmission case cover 80 and to FIG. 3 in which is shown a longitudinal cross section of the transmission case cover 80, the transmission case cover 80 includes on the whole a peripheral wall section 81 which has a connecting surface K with the transmission case 23 and extends to the outside in the vehicle width direction around the outer circumference of the V-belt 64, and a lateral wall section 82 which extends inwardly from the peripheral wall section 81 and covers the V-belt 64 from the outside in the vehicle width direction.

In the peripheral wall section 81 there are formed a plurality of fastening boss portions 81b which are protruded on the outer peripheral side. These fastening boss portions 81b are fastened to the transmission case 23 by fastening bolts 99, so that the transmission case cover 80 is attached to the transmission case 23 (see FIG. 2).

In a front part of the lateral wall section 82 of the transmission case cover 80 extending long in the forward and rearward direction, there is formed a cooling air inlet port 83 in the shape of a circular opening, and, in a rear part thereof, there is formed a clutch housing section 84 which swells out to the left thereby to cover the centrifugal clutch 71 from the left side (see FIG. 5).

Around a middle portion in the forward and rearward direction of the lateral wall section 82 of the transmission case cover 80, which is located to the rear of the cooling air inlet port 83 and forwardly of the clutch housing section 84, a motor unit mounting section 85 for mounting the motor unit 100 thereon is formed at the side close to the cooling air inlet port 83.

The motor unit mounting section 85 is formed in a peripheral edge of a longitudinally extending long circular opening 85h.

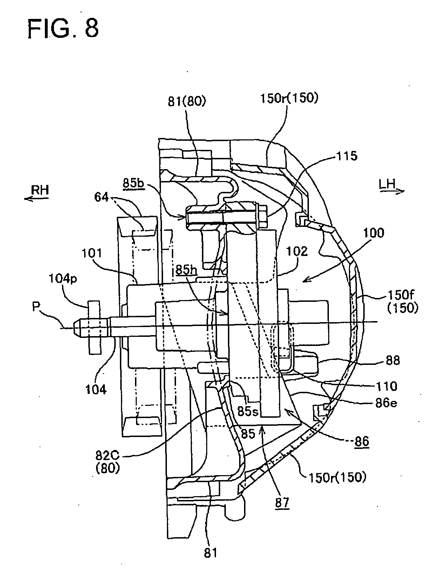

In a region (region shown by a dotted pattern in FIG. 5) in the forward and rearward direction of the motor unit mounting section 85 of the lateral wall section 82, there is formed a curved concave section 82C which has a curved surface swelling out to the side (to the right side) of the belt transmission chamber 68 (see FIG. 8). The curved concave section 82C has a curved surface curved in the upward and downward direction of the transmission case cover 80. The curved surface is formed over the full width in the vertical direction of the transmission case cover 80.

A center of the vertical width of the curved concave section 82C is located in the vicinity of a plane P containing the axis of the crankshaft 40 corresponding to the drive shaft on which the drive pulley 61 of the V-bet continuously variable transmission system 60 is pivotally supported and an axis of the reduction gear input shaft 74 corresponding to the driven shaft on which the driven pulley 65 is pivotally supported. A curved bottom portion of the curved concave section 82C is located on the plane P containing these two axes (see FIGS. 4, 5 and 8).

In the curved bottom portion of the curved concave section 82C, the peripheral edge portion of the long circular opening 85h projects a little toward the outside (left side) so as to form the motor unit mounting section 85. A mounting seat surface 85s which is a projecting end surface of the motor unit mounting section 85 is formed in a vertically flat surface (see FIG. 8).

The motor unit mounting section 85 having the long circular opening 85h is located in such a position as to be divided into upper and lower halves by the two axes containing plane P containing the axis of the crankshaft 40 functioning as the drive shaft of the V-belt continuously variable transmission system 60 and the axis of the reduction gear input shaft 74 functioning as the driven shaft of the V-belt continuously variable transmission system 60.

In the curved concave section 82C of the transmission case cover 80, two mounting bolt holes 85b are formed in rear upper and lower areas of the motor unit mounting section 85, and another two mounting bolt holes 85b are formed in the obliquely upward and downward direction of a front area of the motor unit mounting section 85, respectively (see FIG. 5). These four mounting bolt holes 85b have hole end surfaces which are flush with the mounting seat surfaces 85s. The motor unit 100 is mounted by screwing fastening bolts 115 into these four mounting bolt holes 85b.

The motor unit mounting section 85 is formed in the curved bottom portion of the curved concave section 82C formed in the middle position in the forward and rearward direction of the transmission case cover 80, and the motor unit 100 is attached to this motor unit mounting section 85.

Between the motor unit mounting section 85 of the transmission case cover 80 and the clutch housing section 84 in the rear thereof, an air discharge duct 86 which has a lower opening functioning as an outwardly open cooling air outlet port 87 and extends upwardly in a cylindrical shape, is formed in the inner surface of the lateral wall section 82 of the transmission case cover 80.

Namely, the cooling air outlet port 87 for discharging the cooling air within the belt transmission chamber 68 to the outside is located between the motor unit mounting section 85 and the clutch housing section 84 in the forward and rearward direction.

In addition, the air discharge duct 86 is provided in the lateral wall section 82 with an outwardly protruding wall 86e which protrudes outwardly from the motor unit mounting section 85 in the vehicle width direction (see FIG. 3).

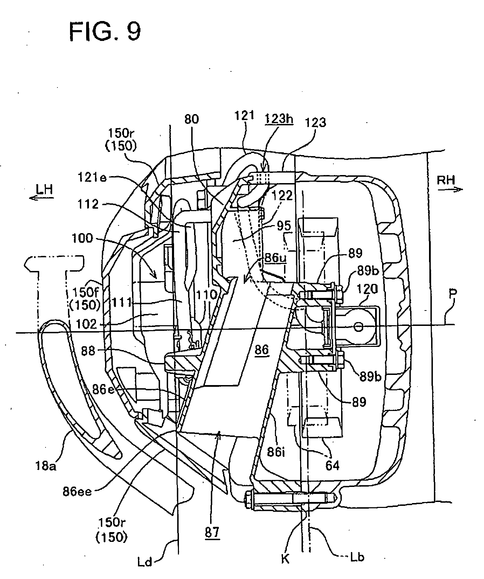

An upper end opening 86u of the air discharge duct 86 which opens into the belt transmission chamber 68 is formed in a position a little higher than a middle height position in the upward and downward width of the lateral wall section 82 (see FIG. 9).

The air discharge duct 86 extends in an inclined fashion from the upper end opening 86u opening into the belt transmission chamber 68, downwardly in the somewhat oblique rearward direction and outwardly (to the left) in the vehicle width direction and reaches the outwardly open cooling air outlet port 87 (see FIGS. 5 and 9).

The cooling air inlet port 83, the motor unit mounting section 85, the air discharge duct 86 and the clutch housing section 84 are located on the two axes containing plane P containing the axis of the crankshaft 40 functioning as the drive shaft on which the drive pulley 61 of the V-belt continuously variable transmission system 60 is pivotally supported and the axis of the reduction gear input shaft 74 functioning as the driven shaft on which the driven pulley 65 is pivotally supported (see FIGS. 4 and 5).

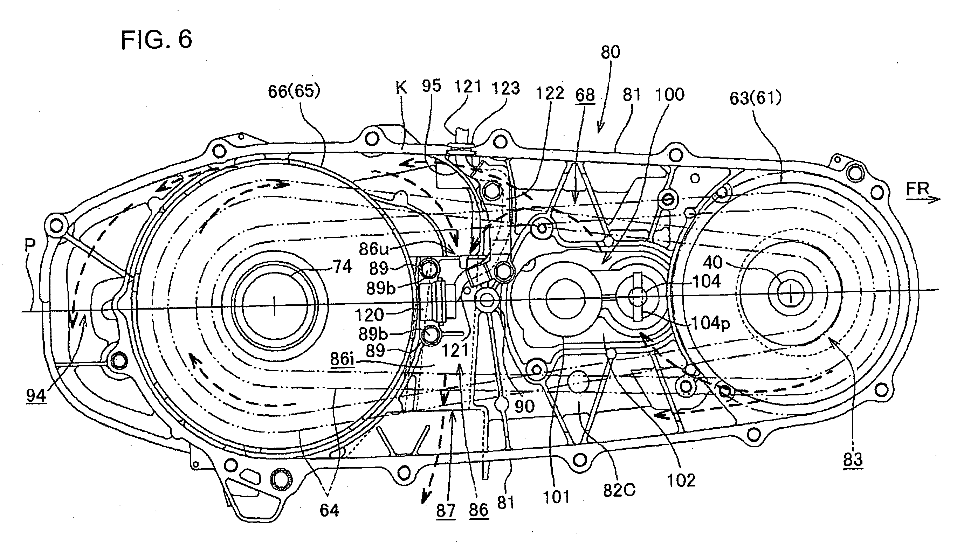

Referring to FIG 6 showing the back side (right side in the vehicle width direction) of the transmission case cover 80, a guide rib 95 is formed in a projecting fashion in the inner surface of the lateral wall section 82 located above the upper end opening 86u of the air discharge duct 86 of the transmission case cover 80. The guide rib 95 is located in a forward position in the obliquely upward direction of the clutch outer 73 of the centrifugal clutch 71 and curved in a circular arc shape from the peripheral wall section 81 in such a way as to extend forwardly and obliquely downwardly to thereby reach a front end edge of the upper end opening 86u of the air discharge duct 86.

A projection 88 is formed in a projecting fashion from a middle height position of the left lateral surface of the outwardly protruding wall 86e of the air discharge duct 86 toward the outside (left side) in the vehicle width direction (see FIGS. 5 and 9).

Further, an inside lateral wall 86i of the discharge duct 86 is formed so as to swell up to a position close to the connecting surface K with the transmission case 23 on the inside (right side) in the vehicle width direction. A pair of upper and lower sensor mounting boss sections 89, 89 projects from an upper end and a middle height position of the inside lateral wall 86i toward the inside (right side) in the vehicle width direction and extends beyond the connecting surface K with the transmission case 23 (see FIGS. 6 and 9).

A rotational speed sensor 120 is mounted on the sensor mounting boss sections 89, 89 projecting from the inner surface of the transmission case cover 80, by means of bolts 89b, 89b, and arranged in a projecting fashion.

Further, in the lateral wall section 82 located between the motor unit mounting section 85 and the air discharge duct 86 of the transmission case cover 80, a center fastening boss portion 90 projects toward the inside (right side) in the vehicle width direction and extends to the connecting surface K with the transmission case 23 (see FIGS. 3 and 6).

The center mounting boss portion 90 makes contact, at the connecting surface K, with a center fastening boss portion 23b projecting from the transmission case 23 side. A fastening bolt 91 to be inserted from the left side is screwed into the center fastening boss portion 90, so that the transmission case cover 80 is fastened to the transmission case 23 in the middle position.

The air discharge duct 86 has a forward swelling portion 86f a portion of which swells forwardly on the whole in the upward and downward direction thereof. The forward swelling portion 86f is registered in the forward and rearward direction with a bolt fastening seat surface 90s which is formed on a left lateral surface of the center fastening boss portion 90 (see FIG. 3). Namely, the forward swelling portion 86f is arranged in an overlapping positional relationship with the bolt fastening seat surface 90s, when viewed in the vehicle width direction.

Referring to FIG. 3, the air discharge duct 86 formed between the motor unit mounting section 85 and the clutch housing section 84 of the transmission case cover 80 is located in a position overlapping in the vehicle width direction with the centrifugal clutch 71 in a forward region of the centrifugal clutch 71.

Moreover, the sensor mounting boss sections 89, 89 are located in front of the driven pulley 65, and the rotational speed sensor 120 which is arranged in the sensor mounting boss sections 89, 89 in a projecting fashion is located on the two axes containing plane P containing the axis of the crankshaft 40 and the axis of the reduction gear input shaft 74 and situated in front of and in the vicinity of the fixed driven pulley half body 66 (see FIGS 3 and 6).

The rotational speed sensor 120 is a magnetometric sensor and detects the rotational speed of the fixed driven pulley half body 66 located in the vicinity thereof.

The air discharge duct 86 has a rearwardly swelling portion 86r a leftward portion of which swells rearwardly as the whole in the upward and downward direction thereof in such a way as to approach the centrifugal clutch 71. The rearwardly swelling portion 86r overlaps with an outer circumferential edge of the driven pulley 65 in the forward and rearward direction (see FIG. 3). Namely, the rearwardly swelling portion 86r is arranged in an overlapping positional relation with the outer circumferential edge of the driven pulley 65, when viewed in the vehicle width direction.

The sensor mounting boss sections 89, 89 which are formed in a projecting fashion in such a way as to cross a forward position of the movable driven pulley half body 67 toward the inside in the vehicle width direction are provided on the inside lateral wall 86i of the air discharge duct 86 located in the inside in the vehicle width direction of the transmission case cover 80. The rotational speed sensor 120 mounted on these sensor mounting boss sections 89, 89 is located within the belt transmission chamber 68.

A sensor harness 121 which extends from the rotational speed sensor 120 in the belt transmission chamber 68, as shown in FIGS. 6 and 9, extends from a front part of the rotational speed sensor 120 to the inside lateral wall 861 of the air discharge duct 86 located on the left side, and thereafter goes around to the forward side of the air discharge duct 86. Then, the sensor harness 121 extends upwardly at the front side of the guide rib 85 along the inner surface of the transmission case cover 80 and passes through and goes out from a grommet 123 which engages a concave portion formed by cutting out a portion of the peripheral wall section81 on the upper side of the transmission case cover 80 from the connecting surface K with the transmission case 23.

Referring to FIG. 9, the connecting surface K between the transmission case 23 and the transmission case cover 80 is located outwardly (leftward) in the vehicle width direction from a position in the vehicle width direction of a center line Lb in the vehicle width direction of the V-belt 64 at the time when the wrapping diameter of the V-belt 64 wrapped around the driven pulley 65 is smallest.

Then, the sensor harness 121 is arranged along the inner surface of the lateral wall section 82 of the transmission case cover 80, and is held down from the inside in the vehicle width direction by a harness restraining plate 122 which is attached to the lateral wall section 82 from the inside, so that it is restrained in a position along the inner surface of the transmission case cover 80, located inwardly in the vehicle width direction from the connecting surface K with the transmission case 23 (see FIG. 9).

A harness outlet 123h is formed in the grommet 123 which is located in the peripheral wall section 81 on the upper side of the transmission case cover 80 and from which the sensor harness 121 is drawn out to the outside. The harness outlet 123h is located outwardly in the vehicle width direction from the V-belt 64 (the V-belt illustrated by two-dot chain lines in FIG. 9) at the time when the wrapping diameter of the V-belt 64 wrapped around the driven pulley 65 is smallest.

Like this, the sensor harness 121 which is arranged in the belt transmission chamber 68 and drawn out upwardly from the grommet 123 of the peripheral wall section 81 on the upper side of the transmission case cover 80 is bent leftward so as to extend along an upper surface of the peripheral wall section 81 on the upper side, and goes around to a left lateral surface of the lateral wall section 82 so as to be led downwardly.

Referring to FIG. 4, on the upper side of a rear part of a unit case 102 of the motor unit 100 attached to the lateral wall section 82, an electric coupler 125 is supported on a coupler supporting stay 124 which is fastened together with the unit case 102 by the fastening bolts 115. The sensor harness 121 which extends downwardly along the left lateral surface of the lateral wall section 82 is connected to a lower end portion of the electric coupler 125.

A motor harness 111 is arranged in the vicinity of a front part of the air discharge duct 86 on the outside of the transmission case cover 80. Almost the whole motor harness 111 is arranged inwardly (rightward) in the vehicle width direction from a position in the vehicle width direction (position Ld in the vehicle width direction in FIG. 9) of an outermost portion 86ee (lower end portion of the outwardly protruding wall 86e) in the vehicle width direction of the air discharge duct 86.

In addition, the projection 88 which projects from the outwardly protruding wall 86e toward the outside (left side) in the vehicle width direction extends more outwardly in the vehicle width direction from the outermost portion 86ee in the vehicle width direction of the air discharge duct 86 (see FIG. 9).

Further, on the outside in the vehicle width direction of the projection 88 of the air discharge duct 86, as shown in FIG. 9, an operation arm 18a which extends from a left leg portion of the main stand 18 in a raised state at the time of travelling is situated in an outward position away from the outermost cover 150.

Accordingly, the outwardly protruding wall 86e and the projection 88 of the air discharge duct 86, and the operation arm 18a of the main stand 18 are configured to protect almost the whole motor harness 111 containing the electric coupler 111, from external factors from the outside in the vehicle width direction.

The motor unit 100 is mounted on the motor unit mounting section 85 which is formed in the curved bottom portion of the curved concave section 82C located in the middle position in the forward and rearward direction of the transmission case cover 80 and has a reduction direct transmission device 103 accommodated in the unit case 102 of flat drum shape. The speed change motor 101 for inputting the motive power to the reduction direct transmission device 103 is provided in a projecting fashion on one surface of the unit case 102, and a slide rod 104 projects perpendicularly from the same surface of the unit case 102.

In the motor unit 100, when the speed change motor 101 is rotated, the reduction direct transmission device 103 is decelerated, and the rotation is converted into direct transmission of the slide rod 104 to thereby be outputted as a sliding movement of the slide rod 104.

In the motor unit 100 as described above, in a position where the unit case 102 of flat drum shape in which the reduction direct transmission device 103 is accommodated is stood perpendicularly, and the slide rod 104 and the speed change motor 101 are placed in front and in the rear in a state of projecting to the right, the slide rod 104 and the speed change motor 101 are inserted into the long circular opening 85h from the outside (left side) in the vehicle width direction and brought into contact with the mounting seat surface 85s which is in the form of vertically flat surface of the motor unit mounting section 85. Then, the motor unit 100 is slid forwardly, and an engaging pin 104p is engaged with a fork member 105 to be referred to later. Thereafter, four mounting brackets 102b provided in the periphery of the unit case 102 are located in a face to face relationship with the four mounting bolt holes 85b and fastened by the fastening bolts 115, so that the motor unit 100 is mounted on or attached to the transmission case cover 80.

The long circular opening 85h of the transmission case cover 80 is covered with the unit case 102 of the motor unit 100 from the outside (left side) in the vehicle width direction. The slide rod 104 and the speed change motor 101 are inserted into the belt transmission chamber 68.

The engaging pin 104p passes through perpendicularly and is engaged in a distal end of the slide rod 104 which projects from the unit case 102 to the belt transmission chamber 68.

On the other hand, the outer fitting member 106 which is in fitting engagement with the movable drive pulley half body 63 through the ball bearing 107 has a projecting portion 106a in the rear thereof, and the fork member 105 is bolted onto and securely fixed on the projecting portion 106a. A fork portion 105f of the fork member 105 is engaged on the engaging pin 104p located in the distal end of the slide rod 104.

Accordingly, when the speed change motor 101 of the motor unit 100 is operated and the slide rod 104 slides in the vehicle width direction through the reduction direct transmission device 103, the fork member 105 is moved in the vehicle width direction together with the outer fitting member 106, due to the engagement between the engaging pin 104p and the fork portion 105f. Therefore, the outer fitting member 106 is moved in the vehicle width direction while keeping the movable drive pulley half body 63 rotatable through the ball bearing 107, whereby the groove width between the fixed drive pulley half body 62 and the movable drive pulley half body 63 is adjusted to thereby carry out the speed change.

Further, the motor unit 100 has an electric coupler 110 extending rearwardly from the unit case 102. In the rearward direction of the unit case 102, the electric coupler 110 covers the outsides (left sides) in the vehicle width direction of the center fastening boss portion 90 and the fastening bolt 91 between the motor unit mounting section 85 and the air discharge duct 86 and extends to a position close to the projection 88 which projects from the outwardly protruding wall 86e of the air discharge duct 86 toward the outside (left side) in the vehicle width direction (see FIGS. 3 and 4). The electric coupler 110 is located inwardly in the vehicle width direction from a left end of the projection 88 (see FIG. 9).

The motor harness 111 extends upwardly from the electric coupler 110 along the lateral wall section 82 of the transmission case cover 80 and is assembled on the way into a harness assembly 112 together with an extension sensor harness 121e extending from an upper end portion of the electric coupler 125 to which the sensor harness 121 is connected (see FIG. 9). The harness assembly 112, after extending more upwardly, goes around to the upper side of the peripheral wall section 81 in such a way as to be arranged between the peripheral wall section 81 and the air cleaner 33 in a state of facing forwardly, and is connected to a harness (not shown) on the vehicle body frame side (see FIG. 4).

Referring FIGS. 3 and 7, an inside duct cover 131 faces the lateral wall section 82 on the front side of the transmission case cover 80 in which the cooling air inlet port 83 is formed, and is attached through an annular seal member 135 to the lateral wall section 82 from the left side. An outside duct cover 132 is fitted to the attached inside duct cover 131 from the left side in a state of covering the inside duct cover 131, whereby an air guide duct 130 is formed.

The inside duct cover 131 is formed with an inside cover air suction port 131h corresponding to the cooling air inlet port 83 of the transmission case cover 80, and an upper extension wall 131e extending upwardly from the peripheral wall section 81 on the upper side of the transmission case cover 80.

As shown in FIG. 7, the upper extension wall 131e of the inside duct cover 131 is bent to the right along the wall surface of the transmission case cover 80 which extends while bending from the lateral wall section 82 on the upper side of the cooling air inlet port 83 to the peripheral wall section 81 on the upper side. This upper extension wall 131e swells out to the right above the peripheral wall section 81 on the upper side so as to be formed in a U-shape in cross section.

The outside duct cover 132 for covering the inside duct cover 131 from the left side is formed, on the whole, of a peripheral wall portion 132s which extends as a double-framed wall to the left from an engaging portion which is engaged through an annular seal member 136 with a peripheral wall portion of the inside duct cover, and a lateral wall portion 132t which extends from a left end edge of the peripheral wall portion 132s so as to face the inside duct cover 131.

A space surrounded by the peripheral wall portion 132s between the lateral wall portion 132t of the outside duct cover 132 and the inside duct cover 131 is an air guide passage of the air guide duct 130. As shown in FIG. 3, the lateral wall portion 132t approaches the inside duct cover as it goes forward, and the air guide duct 130 is tapered forwardly. A part of the peripheral wall portion 132s which closes a rearwardly expanded rear part of the air guide duct 130 functions as a partition wall 132sp for providing a partition between the air guide duct 130 and the motor unit 100 in the rear.

A fresh air inlet 133 of the air guide duct 130 provided with a louver 132el, is open at an upper extension wall 132e which faces the upper extension wall 131e of the inside duct cover 131 in an upper area of the lateral wall portion 132t of the outside duct cover 132.

Since the fresh air inlet 133 is located in a face to face relationship with the upper extension wall 131e which swells rightward above the peripheral wall section 81 on the upper side of the transmission case cover 80, a fresh air inlet space 130u into which the fresh air inlet 133 faces is configured to swell inwardly (rightward) in the vehicle width direction above the peripheral wall section 81 on the upper side of the transmission case cover 80.

The inside duct cover 131 and the outside duct cover 132 are mounted on the transmission case cover 80 by being fastened together by fastening bolts 93 to be screwed into fastening bolt holes 92 (see FIG. 5) which are formed in two front upper and lower positions and in two rear upper and lower positions of the lateral wall section 82 on the front side of the transmission case cover 80 in which the cooling air inlet port 83 is formed (see FIG. 4).

When the crankshaft is rotated by the operation of the internal combustion engine 21 and the cooling fan 62f of the fixed drive pulley half body 62 is rotated simultaneously, as shown by arrows of broken lines in FIG. 7, fresh air is taken into the fresh air inlet space 130u from the fresh air inlet 133. Then, it is guided through the air guide duct 130 to the inside cover air suction port 131h of the inside duct cover 131 and the cooling air inlet port 83 of the transmission case cover 80 and drawn into the belt transmission chamber 68 by being sucked from the cooling air inlet port 83.

By the way, a second cooling air outlet port 94 which is open downwardly to the rear of the centrifugal clutch 71 in a rear part of the belt transmission chamber 68 is formed as an opening common to the transmission case 23 and the transmission case cover 80 (see FIGS. 3 and 4).

An outer side (left side) in the vehicle width direction of the transmission case cover 80 is covered with the resin outermost cover member 150.

Mounting bolt holes 96, 96 are formed in upper and lower positions of the front part of the transmission case cover 80, and a bolt mounting hole 96 is formed in a position of the rear part thereof (see FIGS. 5 and 6).

Referring to FIG. 2, the outermost cover member 150 includes a front cover section 150f which extends in a tapered shape in the front to rear direction, and a rear cover section 150r which is bifurcated in the rear to front direction and holds a tapered portion of the front cover section 150f from the upper and lower sides. The front cover section 150f and the rear cover section 150r are combined into the outermost cover member 150. The outermost cover member 150 is configured to cover, from the outside in the vehicle width direction, the air guide duct 130 formed of the inside duct cover 131 and the outside duct cover 132 attached to the front part of the transmission case cover 80, the motor unit 100 attached to the middle part, and the clutch housing section 84 in the rear part, and is attached to the transmission case cover 80 by fastening bolts 151 to be screwed into the mounting bolt holes 96 in three positions (see FIGS. 2 and 4).

A portion of the motor unit 100 mounted on the curved bottom portion of the curved concave section 82C from the outside in the vehicle width direction is arranged in a space formed between the curved concave section 82C and the outermost cover member 150.

Referring to FIG. 6, the speed change motor 101 and the slide rod 104 of the motor unit 100 projecting into the belt transmission chamber 60, and the rotational speed sensor 120 provided in the belt transmission chamber 68 are located on the two axes containing plane P containing the axis of the crankshaft 40 functioning as the drive shaft on which the drive pulley 61 of the V-bet continuously variable transmission system 60 is pivotally supported and the axis of the reduction gear input shaft 74 functioning as the driven shaft on which the driven pulley 65 is pivotally supported. Moreover, the speed change motor 101, the slide rod 104 and the rotational speed sensor 120 are arranged in the middle height position between the upper rotating portion and the lower rotating portion of the V-belt 64, by effectively utilizing the inside space of the V-belt 64 which is wrapped around the drive pulley 61 and the driven pulley 65 and rotated in an annular shape (see FIGS. 8 and 9).

Referring further to FIG. 6, as described above, the fresh air which is taken into the fresh air inlet 133, guided by the air guide duct 130 and drawn into the belt transmission chamber 68 from the cooling air inlet port 83 when the cooling fan 62f of the fixed drive pulley half body 62 together with the crankshaft 40 is rotated, as shown by the arrows of the broken lines in FIG. 6, flows rearwardly and obliquely upwardly from the lower side of the drive pulley 61 in such a way as to traverse the speed change motor 101 and the like while being dragged by the rotation (clockwise rotation in FIG. 6) of the drive pulley 61, and a portion of the fresh air flows rearwardly along the peripheral wall section 81 on the lower side of the transmission case cover 80.

The fresh air which flows upwardly while traversing the speed change motor 101 and the like makes a turn and changes its flow downwardly to thereby be sucked into the upper end opening 86u of the air discharge duct 86. Thereafter, it is guided by the air discharge duct 86 and discharged to the outside from the cooling air outlet port 87.

A portion of the cooling air flowing upwardly while traversing the speed change motor 101 and the like goes around to the rear side of the guide rib 95 and flows rearwardly along the upper peripheral wall section 81 in the inside of the clutch housing section 84. Then, the air flow makes a turn downwardly along the peripheral wall section 81 on the rear side and is discharged from the second cooling air outlet port 94 to the outside.

Further, the fresh air flowing from the lower side of the drive pulley 61 rearwardly along the peripheral wall section 81 on the lower side of the transmission case cover 80 reaches the lower side of the driven pulley 65 and is caught in a swirl flow by the rotation (clockwise rotation in FIG. 6) of the driven pulley 65.

With respect to the swirl flow of the cooling air by the rotation of the driven pulley 65 and the centrifugal clutch 71, the cooling air flowing forwardly along the peripheral wall section 81 on the upper side of the transmission case cover 80 is guided by the guide rib 95 to the upper end opening 86u of the air discharge duct 86 to thereby be sucked by the upper end opening 86u. Then, the cooling air is guided to the air discharge duct 86 and discharged to the outside from the cooling air outlet port 87.

Like this, the cooling air introduced into the belt transmission chamber 68 from the cooling air inlet port 83 flows smoothly within the belt transmission chamber 68 and is discharged extremely efficiently to the outside from the cooling air outlet port 87 and the second cooling air outlet port 94.

In the V-belt continuously variable transmission system for the straddle type motorcycle 1, as shown in FIGS. 6 and 9, since the rotational speed sensor 120 is arranged on the inside of the V-belt 64, without being arranged on the outside thereof, which is rotated in an annular shape, when viewed in the axial direction of the drive shaft 40, the transmission case 23 and the transmission case cover 80 can be prevented from being increased in size in the radial direction of the driven pulley 65, and it is possible to improve the freedom of design containing the arrangement of component parts around the transmission case 23 and the transmission case cover 80.

In addition, since the rotational speed sensor 120 is mounted on the transmission case cover 80 located outwardly in the vehicle width direction from the transmission case 23, the maintainability of the rotational speed sensor 120 can be kept in good condition.

The front part of the power unit 20 is supported on a vehicle body frame 2 (see FIG. 1). As shown in FIG. 6, within the belt transmission chamber 68, the rotational speed sensor 120 is located forwardly of the reduction transmission input shaft 74 which is arranged to the rear of the crankshaft 40. With this construction, generally in the case where the harness of electrical components parts of the power unit 20 side is arranged from the front part of the power unit 20 to the vehicle body frame 2 side, and where the sensor harness 121 extending from the rotational speed sensor 120 also is arranged from the front part of the power unit 20 to the vehicle body frame 2 side, the length of the harness of the sensor harness 121 can be shortened since the rotational speed sensor 120 is situated in front of the driven shaft 74.

Referring to FIG. 6, since the rotational speed sensor 120 is arranged on the plane P containing the axis of the drive shaft 40 and the axis of the driven shaft 74, the rotational speed sensor 120 can be situated in the middle height position between the upper rotating portion and the lower rotating portion of the V-belt 64 on the inside of the V-belt 64 which is wrapped around the drive pulley 61 pivotally supported on the drive shaft 40 and the driven pulley 65 pivotally supported on the driven shaft 74 and which is rotated in an annular shape, and it can be effectively prevented from interfering with the V-belt 64 which is fluctuated in positions due to changes in width in the upward and downward direction between the upper rotating portion and the lower rotating portion of the V-belt 64, that arise from the motion in variable speed and due to the vibrations of the V-belt 64, whereby it is possible to maintain an enough area for the motion in variable speed.

Since the rotational speed sensor 120 is mounted on the inner surface of the lateral wall section 82 of the transmission case cover 80, the rotational speed sensor 120 can be easily arranged in the predetermined position within the belt transmission chamber 68 when the transmission case cover 80 on the inner surface of which the rotational speed sensor 120 is mounted is connected together with the transmission case 23 in such a way as to cover the latter, whereby the rotational speed sensor 120 can be prevented from being exposed to the outside of the vehicle and it is easy to protect the rotational speed sensor 120 from external factors.

In addition, since the rotational speed sensor 120 is attached to the inner surface of the lateral wall section 82 of the transmission case cover 80, the projection of the rotational speed sensor 120 to the outside in the vehicle width direction can be suppressed, whereby a bank angle of the straddle type vehicle can be ensured sufficiently.

A portion of the lateral wall section 82 of the transmission case cover 80 projects inwardly in the vehicle width direction so as to form the sensor mounting boss section 89 (see FIG. 9), and the rotational speed sensor 120 which is mounted on the sensor mounting boss section 89, as shown in FIGS. 3 and 6, is arranged in front of and in the vicinity of the fixed driven pulley half body 66. With this construction, the rotational speed sensor 120 and the fixed driven pulley half body 66 can be compactly arranged in the vehicle width direction, and the increase in size of the V-belt continuously variable transmission system 60 in the vehicle width direction can be suppressed in the straddle type vehicle, whereby it is possible to ensure the bank angle sufficiently in the straddle type vehicle.

The cooling air inlet port 83 for introducing cooling air into the belt transmission chamber 68, and the air discharge duct 86 having the cooling air outlet port 87 for discharging the cooling air outwardly, are formed in the transmission case cover 80 (see FIG. 5). The air discharge duct 86 is formed in a cylindrical shape by the lateral wall section 82 of the transmission case cover 80 and the inside lateral wall 86i which is formed in a swelling fashion from the inner surface of the lateral wall section 82 (see FIGS. 3 and 6), and the sensor mounting boss section 89 is integrally formed in the inside lateral wall 86i as shown in FIG. 9. With this construction, the sensor mounting boss section 89 is shortened in the projecting length and decreased in size so as to easily ensure the rigidity, so that the supporting strength of the rotational speed sensor 120 can be improved.

As shown in FIG. 9, the connecting surface K between the transmission case 23 and the transmission case cover 80 is located outwardly in the vehicle width direction from the position in the vehicle width direction of the center line Lb in the vehicle width direction of the V-belt 64 at the time when the wrapping diameter of the V-belt 64 wrapped around the driven pulley 65 is smallest, and the sensor harness 121 extending from the rotational speed sensor 120 is arranged along the inner surface of the lateral wall section 82 of the transmission case cover 80 and drawn out from the harness outlet 123h which is formed in a recessed fashion in the connecting surface K of the transmission case cover 80. With this construction, the sensor harness 121 which extends from the rotational speed sensor 120 can be effectively prevented from interfering with the V-belt 64 which is fluctuated in positions due to the changes in width in the upward and downward direction between the upper rotating portion and the lower rotating portion of the V-belt 64, that arise from the motion in variable speed and due to the vibrations of the V-belt 64.

As shown in FIG. 9, since the harness outlet 123h is formed outwardly in the vehicle width direction from the V-belt 64 at the time when the wrapping diameter of the V-belt 64 wrapped around the driven pulley 65 is smallest, the interference between the V-belt 64 and the sensor harness 121 can be prevented more effectively, and the interference between the driven pulley 65 and the sensor harness 121 can also be prevented in the radial direction of the driven pulley 65.

Therefore, the transmission case 23 and the transmission case cover 80 can be decreased in size in the radial direction of the driven pulley 65 all the more.

As shown in FIG. 6, since the motor unit 100 for adjusting the groove width of the drive pulley 61 is mounted on the transmission case cover 80, both of the rotational speed sensor 120 and the motor unit 100 are mounted on the transmission case cover 80, so that the access to each of the rotational speed sensor 120 and the motor unit 100 can be facilitated so as to improve the maintainability all the more.

### DESCRIPTION OF REFERENCE CHARACTERS

1: Straddle type two-wheeled motorcycle, 2: Vehicle body frame, 20: Power unit, 21: Internal combustion engine, 23: Transmission case, 40: Crankshaft, 60: V-belt continuously variable transmission system, 61: Drive pulley, 62: Fixed drive pulley half body, 63: Movable drive pulley half body, 64: V-belt, 65: Driven pulley, 66: Fixed driven pulley half body, 67: Movable driven pulley half body, 68: V-belt transmission chamber, 80: Transmission case cover, 81: Peripheral wall section, 82: Lateral wall section, 83: Cooling air inlet port, 84: Clutch housing section, 85: Motor unit mounting section, 86: Air discharge duct, 86u: Upper end opening, 87: Cooling air outlet port, 89: Sensor mounting boss section, 100: Motor unit, 101: Speed change motor, 102: Unit case, 120: Rotational speed sensor, 121: Sensor harness, 122: Harness restraining plate, 123: Grommet, 123h: Harness outlet

## Claims

1. A V-belt continuously variable transmission system for a straddle type vehicle comprising:
a transmission case (23);
a transmission case cover (80) for covering the transmission case (23) from the outside in the vehicle width direction;
a belt transmission chamber (68) formed in an internal area between the transmission case (23) and the transmission case cover (80);
a drive pulley (61) pivotally supported on a drive shaft (40) extending in the vehicle width direction;
a driven pulley (65) pivotally supported on a driven shaft (74) which is arranged in parallel with the drive shaft (40);
a V-belt (64) wrapped around the drive pulley (61) and the driven pulley (65); the drive pulley (61), the driven pulley (65) and the V-belt (64) being accommodated in the belt transmission chamber (68); and
a rotational speed sensor (120) for detecting a rotational speed of the driven pulley (65), being mounted on the transmission case cover (80);
**characterized by** the fact that the rotational speed sensor (120) is arranged on the inside of the V-belt (64) which is rotated in an annular shape, when viewed in the axial direction of the drive shaft (40).

2. A V-belt continuously variable transmission system for a straddle type vehicle according to claim 1, wherein a main body of an internal combustion engine of the straddle type vehicle can be connected continuously to a front part of the transmission case (23) so as to form a power unit (20), a front part of said power unit (20) being supported on a vehicle body frame (2) of the straddle type vehicle, and
wherein, within the belt transmission chamber (68), the driven shaft (74) is situated to the rear of the drive shaft (40), and the rotational speed sensor (120) is situated forwardly of the driven shaft (74).

3. A V-belt continuously variable transmission system for a straddle type vehicle according to claim 2, wherein the rotational speed sensor (120) is arranged on a plane (P) containing an axis of the drive shaft (40) and an axis of the driven shaft (74).

4. A V-belt continuously variable transmission system for a straddle type vehicle according to claim 3, wherein the rotational speed sensor (120) is mounted on an inner surface of a lateral wall section (82) of the transmission case cover (80).

5. A V-belt continuously variable transmission system for a straddle type vehicle according to claim 4, wherein the driven pulley (65) comprises a movable driven pulley half body (67) which is pivotally supported on the driven shaft (74) in an axially movable fashion, and a fixed driven pulley half body (66) which is fixed on the driven shaft (74) on the inside in the vehicle width direction of the movable driven pulley half body (67), and wherein a portion of the lateral wall section (82) of the transmission case cover (80) projects inwardly in the vehicle width direction so as to form a sensor mounting boss section (89), and the rotational speed sensor (120) which is mounted on the sensor mounting boss section (89) is arranged in front of and in the vicinity of the fixed driven pulley half body (66).

6. A V-belt continuously variable transmission system for a straddle type vehicle according to claim 5, further comprising an inlet port (83) for introducing cooling air into the belt transmission chamber (68), and an air discharge duct (86) having a outlet port (87) for discharging the cooling air outwardly, the inlet port (83) and the discharge duct (86) being formed in the transmission case cover (80), wherein the air discharge duct (86) is formed in a cylindrical shape by the lateral wall section (82) of the transmission case cover (80) and an inside lateral wall (86i) which is formed in a swelling fashion from an inner surface of the lateral wall section (82), and the sensor mounting boss section (89) is formed in the inside lateral wall (86i).

7. A V-belt continuously variable transmission system for a straddle type vehicle according to claim 5 or 6, further comprising a connecting surface (K) between the transmission case (23) and the transmission case cover (80), which is located outwardly in the vehicle width direction from a position in the vehicle width direction of a center line (Lb) in the vehicle width direction of the V-belt (64) at the time when a wrapping diameter of the V-belt (64) wrapped around the driven pulley (65) is smallest, and a sensor harness (121) extending from the rotational speed sensor (120), wherein the sensor harness (121) is arranged along the inner surface of the lateral wall section (82) of the transmission case cover (80) and drawn out from a harness outlet (123h) which is formed in a recessed fashion in the connecting surface (K) of the transmission case cover (80).

8. A V-belt continuously variable transmission system for a straddle type vehicle according to claim 7, wherein the harness outlet (123h) is formed outwardly in the vehicle width direction from the V-belt (64) at the time when the wrapping diameter of the V-belt (64) wrapped around the driven pulley (65) is smallest.

9. A V-belt continuously variable transmission system for a straddle type vehicle according to any one of claims 1-8, further comprising a motor unit (100) for adjusting a groove width of the drive pulley (61), wherein the motor unit (100) is mounted on the transmission case cover (80).

## Patentansprüche

1. Stufenloses Keilriemengetriebesystem für ein Fahrzeug vom Grätschsitztyp, umfassend:
ein Getriebegehäuse (23);
eine Getriebegehäuseabdeckung (80) zum Abdecken des Getriebegehäuses (23) von der Außenseite in der Fahrzeugbreitenrichtung;
eine Riemenübertragungskammer (68), die in einem internen Bereich zwischen dem Getriebegehäuse (23) und der Getriebegehäuseabdeckung (80) gebildet ist;
eine Antriebsriemenscheibe (61), welche drehbar auf einer Antriebswelle (40) unterstützt ist, die sich in der Fahrzeugbreitenrichtung erstreckt;
eine angetriebene Riemenscheibe (65), welche drehbar auf einer angetriebenen Welle (74) unterstützt ist, welche parallel zu der Antriebswelle (40) angeordnet ist;
einen Keilriemen (64), der um die Antriebsriemenscheibe (61) und die angetriebene Riemenscheibe (65) gewickelt ist, wobei die angetriebene Riemenscheibe (65) und der Keilriemen (64) in der Riemenübertragungskammer (68) untergebracht sind; und
einen Drehgeschwindigkeitssensor (120) zum Erfassen einer Drehgeschwindigkeit der angetriebenen Riemenscheibe (65), welcher an der Getriebegehäuseabdeckung (80) angebracht ist;
**gekennzeichnet durch** den Umstand, dass der Drehgeschwindigkeitssensor (120) an der Innenseite des Keilriemens (64) angeordnet ist, welcher in einer Ringform gedreht wird, wenn in der Axialrichtung der Antriebswelle (40) betrachtet.

2. Stufenloses Keilriemengetriebesystem für ein Fahrzeug vom Grätschsitztyp nach Anspruch 1, wobei ein Hauptkörper einer Brennkraftmaschine des Fahrzeugs vom Grätschsitztyp kontinuierlich mit einem Vorderteil des Getriebegehäuses (23) derart verbunden werden kann, dass ein Antriebsaggregat (20) gebildet wird, wobei ein Vorderteil des Antriebsaggregats (20) an einem Fahrzeugkörperrahmen (2) des Fahrzeugs vom Grätschsitztyp unterstützt ist, und
wobei innerhalb der Riemenübertragungskammer (68) sich die angetriebene Riemenscheibe (74) auf der Rückseite der Antriebswelle (40) befindet und sich der Drehgeschwindigkeitssensor (120) vorwärts der angetriebenen Welle (74) befindet.

3. Stufenloses Keilriemengetriebesystem für ein Fahrzeug vom Grätschsitztyp nach Anspruch 2, wobei der Drehgeschwindigkeitssensor (120) auf einer Ebene (P) angeordnet ist, die eine Achse der Antriebswelle (40) und eine Achse der angetriebenen Welle (74) enthält.

4. Stufenloses Keilriemengetriebesystem für ein Fahrzeug vom Grätschsitztyp nach Anspruch 3, wobei der Drehgeschwindigkeitssensor (120) an einer inneren Oberfläche eines seitlichen Wandabschnitts (82) der Getriebegehäuseabdeckung (80) angebracht ist.

5. Stufenloses Keilriemengetriebesystem für ein Fahrzeug vom Grätschsitztyp nach Anspruch 4, wobei die angetriebene Riemenscheibe (65) einen beweglichen Halbkörper der angetriebenen Riemenscheibe (67), welcher drehbar auf der angetriebenen Welle (74) in einer axial beweglichen Weise unterstützt ist, und einen fixierten Halbkörper der angetriebenen Riemenscheibe (66) umfasst, welcher auf der angetriebenen Welle (74) an der Innenseite in der Fahrzeugbreitenrichtung von dem beweglichen Halbkörper der angetriebenen Riemenscheibe (67) befestigt ist, und wobei ein Bereich des seitlichen Wandabschnitts (82) der Getriebegehäuseabdeckung (80) nach innen in der Fahrzeugbreitenrichtung derart vorsteht, dass ein Sensormontageansatzabschnitt (89) gebildet ist, und der Drehgeschwindigkeitssensor (120), welcher an dem Sensormontageansatzabschnitt (89) angebracht ist, vor und in der Nähe des fixierten Halbkörpers der angetriebenen Riemenscheibe (66) angeordnet ist.

6. Stufenloses Keilriemengetriebesystem für ein Fahrzeug vom Grätschsitztyp nach Anspruch 5, ferner umfassend eine Eintrittsöffnung (83) zum Einführen von Kühlluft in die Riemenübertragungskammer (68) und einen Luftauslasskanal (86), welcher eine Austrittsöffnung (87) zum Auslassen der Kühlluft nach außen aufweist, wobei die Eintrittsöffnung (83) und die Austrittsöffnung (86) in der Getriebegehäuseabdeckung (80) gebildet sind, wobei der Luftauslasskanal (86) in einer zylindrischen Form durch den seitlichen Wandabschnitt (82) der Getriebegehäuseabdeckung (80) und einer inneren seitlichen Wand (86i) gebildet ist, welche in einer ansteigenden Weise von einer inneren Oberfläche des seitlichen Wandabschnitts (82) gebildet ist, und der Sensormontageansatzabschnitt (89) in der inneren seitlichen Wand (86i) gebildet ist.

7. Stufenloses Keilriemengetriebesystem für ein Fahrzeug vom Grätschsitztyp nach Anspruch 5 oder 6, ferner umfassend eine Verbindungsoberfläche (K) zwischen dem Getriebegehäuse (23) und der Getriebegehäuseabdeckung (80), welche sich außerhalb in der Fahrzeugbreitenrichtung von einer Position in der Fahrzeugbreitenrichtung einer Mittellinie (Lb) in der Fahrzeugbreitenrichtung des Keilriemens (63) zu der Zeit befindet, wenn ein Umwicklungsdurchmesser des um die angetriebene Riemenscheibe (65) gewickelten Keilriemens am geringsten ist, und einen Sensorkabelbaum (121), welcher sich von dem Drehgeschwindigkeitssensor (120) erstreckt, wobei der Sensorkabelbaum (121) entlang der inneren Oberfläche des seitlichen Wandabschnitts (82) der Getriebegehäuseabdeckung (80) angeordnet und aus einem Kabelbaumaustritt (123h) hinausgezogen ist, welcher in einer ausgesparten Weise in der Verbindungsoberfläche (K) der Getriebegehäuseabdeckung (80) gebildet ist.

8. Stufenloses Keilriemengetriebesystem für ein Fahrzeug vom Grätschsitztyp nach Anspruch 7, wobei der Kabelbaumaustritt (123h) nach außen in der Fahrzeugbreitenrichtung von dem Keilriemen (64) zu der Zeit gebildet ist, wenn der Umwicklungsdurchmesser des um die angetriebene Riemenscheibe (65) gewickelten Keilriemens (64) am geringsten ist.

9. Stufenloses Keilriemengetriebesystem für ein Fahrzeug vom Grätschsitztyp nach einem der Ansprüche 1-8, ferner umfassend eine Motoreinheit (100) zum Einstellen einer Rillenbreite der Antriebsriemenscheibe (61), wobei die Motoreinheit (100) auf der Getriebegehäuseabdeckung (80) angebracht ist.

## Revendications

1. Système de transmission à variation continue à courroie en V pour un véhicule de type à califourchon comprenant :
un boîtier de transmission (23) ;
un cache-boîtier de transmission (80) permettant de couvrir le boîtier de transmission (23) de l'extérieur dans la direction de la largeur du véhicule ;
une chambre de transmission à courroie (68) formée dans une zone interne entre le boîtier de transmission (23) et le cache-boîtier de transmission (80) ;
une poulie d'entraînement (61) supportée avec faculté de pivotement sur un arbre d'entraînement (40) s'étendant dans la direction de la largeur du véhicule ;
une poulie entraînée (65) supportée avec faculté de pivotement sur un arbre entraîné (74) qui est agencé en parallèle avec l'arbre d'entraînement (40) ;
une courroie en V (64) enveloppée autour de la poulie d'entraînement (61) et la poulie entraînée (65) ; la poulie d'entraînement (61), la poulie entraînée (65) et la courroie en V (64) étant accueillies dans la chambre de transmission à courroie (68) ; et
un capteur de vitesse de rotation (120) permettant de détecter une vitesse de rotation de la poulie entraînée (65), qui est monté sur le cache-boîtier de transmission (80) ;
**caractérisé par le fait que** le capteur de vitesse de rotation (120) est agencé sur l'intérieur de la courroie en V (64) qui est mise en rotation sous une forme annulaire, telle que vue dans la direction axiale de l'arbre d'entraînement (40).

2. Système de transmission à variation continue à courroie en V pour un véhicule de type à califourchon selon la revendication 1, dans lequel un corps principal d'un moteur à combustion interne du véhicule de type à califourchon peut être raccordé en continu à une partie avant du boîtier de transmission (23) de manière à former une unité de puissance (20), une partie avant de ladite unité de puissance (20) étant supportée sur une ossature de carrosserie de véhicule (2) du véhicule de type à califourchon, et
dans lequel, au sein de la chambre de transmission à courroie (68), l'arbre entraîné (74) est situé à l'arrière de l'arbre d'entraînement (40), et le capteur de vitesse de rotation (120) est situé à l'avant de l'arbre entraîné (74).

3. Système de transmission à variation continue à courroie en V pour un véhicule de type à califourchon selon la revendication 2, dans lequel le capteur de vitesse de rotation (120) est agencé sur un plan (P) contenant un axe de l'arbre d'entraînement (40) et un axe de l'arbre entraîné (74).

4. Système de transmission à variation continue à courroie en V pour un véhicule de type à califourchon selon la revendication 3, dans lequel le capteur de vitesse de rotation (120) est monté sur une surface interne d'une section de paroi latérale (82) du cache-boîtier de transmission (80).

5. Système de transmission à variation continue à courroie en V pour un véhicule de type à califourchon selon la revendication 4, dans lequel la poulie entraînée (65) comprend un demi-corps de poulie entraînée mobile (67) qui est supporté avec faculté de pivotement sur l'arbre entraîné (74) de manière mobile axialement, et un demi-corps de poulie entraînée fixe (66) qui est fixé sur l'arbre entraîné (74) sur l'intérieur dans la direction de la largeur du véhicule du demi-corps de poulie entraînée mobile (67), et dans lequel une portion de la section de paroi latérale (82) du cache-boîtier de transmission (80) fait saillie vers l'intérieur dans la direction de la largeur du véhicule de manière à former une section de bossage de montage de capteur (89), et le capteur de vitesse de rotation (120) qui est monté sur la section de bossage de montage de capteur (89) est agencé devant et au voisinage du demi-corps de poulie entraînée fixe (66).

6. Système de transmission à variation continue à courroie en V pour un véhicule de type à califourchon selon la revendication 5, comprenant en outre une lumière d'admission (83) permettant d'introduire de l'air de refroidissement dans la chambre de transmission à courroie (68), et un conduit d'évacuation d'air (86) comportant une lumière de refoulement (87) permettant d'évacuer l'air de refroidissement vers l'extérieur, la lumière d'admission (83) et le conduit d'évacuation (86) étant formés dans le cache-boîtier de transmission (80), dans lequel le conduit d'évacuation d'air (86) est formé de manière cylindrique par la section de paroi latérale (82) du cache-boîtier de transmission (80) et une paroi latérale intérieure (86i) qui est formée de manière gonflante à partir d'une surface interne de la section de paroi latérale (82), et la section de bossage de montage de capteur (89) est formée dans la paroi latérale intérieure (86i).

7. Système de transmission à variation continue à courroie en V pour un véhicule de type à califourchon selon la revendication 5 ou 6, comprenant en outre une surface de raccordement (K) entre le boîtier de transmission (23) et le cache-boîtier de transmission (80), qui est située vers l'extérieur dans la direction de la largeur du véhicule depuis une position dans la direction de la largeur du véhicule d'une ligne centrale (Lb) dans la direction de la largeur du véhicule de la courroie en V (64) au moment où un diamètre d'enveloppement de la courroie en V (64) enveloppée autour de la poulie entraînée (65) est le plus petit, et un harnais de capteur (121) s'étendant depuis le capteur de vitesse de rotation (120), le harnais de capteur (121) étant agencé le long de la surface interne de la section de paroi latérale (82) du cache-boîtier de transmission (80) et retiré d'un refoulement de harnais (123h) qui est formé de manière évidée dans la surface de raccordement (K) du cache-boîtier de transmission (80).

8. Système de transmission à variation continue à courroie en V pour un véhicule de type à califourchon selon la revendication 7, dans lequel le refoulement de harnais (123h) est formé vers l'extérieur dans la direction de la largeur du véhicule depuis la courroie en V (64) à un moment où le diamètre d'enveloppement de la courroie en V (64) enveloppée autour de la poulie entraînée (65) est le plus petit.

9. Système de transmission à variation continue à courroie en V pour un véhicule de type à califourchon selon l'une quelconque des revendications 1 à 8, comprenant en outre une unité de moteur (100) permettant d'ajuster une largeur de rainure de la poulie d'entraînement (61), l'unité de moteur (100) étant montée dans le cache-boîtier de transmission (80).
